# EUROPÄISCHE PATENTSCHRIFT

(11) **EP 1 719 720 B1**
(45) Veröffentlichungstag und Bekanntmachung des Hinweises auf die Patenterteilung: **16.01.2008**
(21) Anmeldenummer: 05400016.1
(22) Anmeldetag: 03.05.2005
(51) Int. Cl.: B65G 47/91

(54) **Steuereinrichtung für einen Sauggreifer**
Control device for a suction gripper
Dispositif de contrôle pour une ventouse de préhension

(43) Veröffentlichungstag der Anmeldung: 08.11.2006
(73) Patentinhaber: J. Schmalz GmbH, 72293 Glatten (DE); TRUMPF Werkzeugmaschinen GmbH + Co. KG, 71254 Ditzingen (DE)
(72) Erfinder: Eisele, Thomas, 78737 Fluorn-Winzeln (DE); Harter, Leonhard, 72290 Loßburg-Wittendorf (DE); Vogel, Klaus, 02681 Kirschau OT Rodewitz (DE)
(74) Vertreter: Steimle, Josef

(56) Entgegenhaltungen:
- DE-A1- 3 902 663
- US-A- 4 806 070
- US-A- 5 059 088

## Beschreibung

Die Erfindung betrifft eine Steuereinrichtung für wenigstens einen Sauggreifer.

Aus US-A 5 059 088 ist eine Steuereinrichtung für einen Sauggreifer bekannt.

Sauggreifer sind in mannigfaltigen Ausführungsformen bekannt. Sie dienen dazu, Gegenstände mittels Unterdruck festzuhalten, so dass diese angehoben und an einen anderen Ort verbracht werden können. Bei großen Gegenständen werden diese von mehreren Sauggreifern ergriffen, so dass die Gegenstände zum einen nicht verformt werden, zum anderen die Gewichtskraft und die beim Transport auftretenden Beschleunigungs- und Verzögerungskräfte auf mehrere Sauggreifer verteilt werden. Zu diesem Zweck werden Sauggreiferfelder verwendet, die mit einer Vielzahl von Einzelsauggreifern bestückt sind und die vollflächig auf den zu handhabenden Gegenstand aufgesetzt werden. Weicht die Form des Gegenstands von der Form der Sauggreiferfelder ab oder besitzt der Gegenstand Durchbrüche, so kann es vorkommen, dass einzelne Sauggreifer nicht belegt sind. Diese Sauggreifer saugen dann Umgebungsluft an, was nicht gewünscht wird. Außerdem besteht die Gefahr, dass diese Sauggreifer am Werkstück vorbei beziehungsweise durch das Werkstück hindurchgreifen und die am Sauggreifer vorhandene Dichtlippe dabei eventuell beschädigt wird. Es sind Maschinensteuerungen bekannt, die abhängig von der Form und Gestalt der Werkstücke nur diejenigen Sauggreifer ansteuern, die mit Sicherheit auf dem Werkstück aufliegen und von diesem abgedeckt werden. Nur an diesen Sauggreifern wird ein Unterdruck angelegt. Hierdurch wird vermieden, dass nicht belegte Sauggreifer Umgebungsluft ansaugen. Außerdem können über diese Maschinensteuerung nur die Sauggreifer in Richtung des Werkstücks ausgefahren werden, die zum Transport des Werkstücks benötigt werden. Die anderen, nicht belegten Sauggreifer bleiben in einer zurückgefahrenen Ruhelage, so dass deren Dichtlippen keinen Schaden nehmen.

Der Erfindung liegt die Aufgabe zugrunde, eine Steuereinrichtung bereitzustellen, mit welcher auf einfache Weise ein Sauggreifer derart angesteuert werden kann, dass er gleichzeitig mit Unterdruck versorgt wird und von seiner Ruhelage in seine Arbeitslage verbracht wird.

Diese Aufgabe wird erfindungsgemäß mit einer Steuereinrichtung gelöst, die einen Eingang für Arbeitsdruckluft für einen Ejektor, einen Eingang für Steuerdruckluft für ein Steuerventil, einen Sauganschluss, an welchen der Sauggreifer und der Ejektor angeschlossen sind, einen Eingang für Arbeitsfluid für einen den Sauggreifer anhebenden oder absenkenden Arbeitszylinder und einen Ausgang für das Arbeitsfluid für den Arbeitszylinder aufweist, wobei das Steuerventil einen zwischen einer Ruhelage und einer Arbeitslage verschiebbaren Kolben aufweist, der mittels Beaufschlagung einer Rückstellkraft an einer Stirnseite in seiner Ruhelage gehalten wird und in der Ruhelage über einen Flächenabschnitt an seiner anderen Stirnseite von der Arbeitsdruckluft entgegen der Rückstellkraft beaufschlagt wird und eine Steuerfläche aufweist, an welcher die Steuerdruckluft angreift, wobei die Steuerdruckluft die Steuerfläche entgegen der Rückstellkraft beaufschlagt, und wobei die Kraft der Arbeitsdruckluft auf den Flächenabschnitt kleiner ist als die Rückstellkraft und die Summe der Kräfte der Steuerdruckluft auf die Steuerfläche und die Kraft der Arbeitsdruckluft auf den Flächenabschnitt größer ist als die Rückstellkraft und wobei dabei das Steuerventil von der Ruhelage in die Arbeitslage verlagert wird und dabei sowohl den Eingang für Arbeitsdruckluft mit dem Ejektor und den Eingang und den Ausgang für das Arbeitsfluid für den Arbeitszylinder verbindet.

Die erfindungsgemäße Steuereinrichtung besitzt den wesentlichen Vorteil, dass lediglich ein einziges zu bewegendes Bauteil vorgesehen ist, nämlich ein zwischen einer Ruhelage und einer Arbeitslage verschiebbarer Kolben, welcher Teil des Steuerventils ist, über welches der Ejektor angesteuert wird. An diesem Kolben greift an der einen Stirnseite permanent eine Rückstellkraft an, die den Kolben in der Ruhelage hält. An der gegenüberliegenden Stirnseite greift permanent die Arbeitsdruckluft an, wobei die Angriffsfläche lediglich über einen Flächenabschnitt der Stirnfläche erfolgt der so groß ist, dass die darauf wirkende Kraft geringer ist als die Rückstellkraft. Daher verbleibt der Kolben in der Ruhelage.

Zusätzlich zu diesem Flächenabschnitt weist der Kolben noch eine Steuerfläche auf, an welcher eine Steuerdruckluft angreift. Diese Steuerdruckluft beaufschlagt den Kolben dann, wenn die Steuereinrichtung aktiviert, das heißt von der Maschinensteuerung angesteuert wird. Dann wirken auf den Kolben auf der einen Seite die Rückstellkraft und auf der anderen Seite sowohl die Arbeitsdruckluft am Flächenabschnitt als auch die Steuerdruckluft an der Steuerfläche, wobei die Summe der Kräfte der Arbeitsdruckluft und der Steuerdruckluft größer ist als die Rückstellkraft. Dadurch wird der Kolben von der Ruhelage in die Arbeitslage verschoben und öffnet das Steuerventil, so dass der Ejektor mit Arbeitsdruckluft versorgt wird. Gleichzeitig öffnet der Kolben aber auch die Verbindung zwischen dem Eingang und dem Ausgang für das Arbeitsfluid für den Arbeitszylinder. Dies bedeutet aber auch, dass bei einer nicht angesteuerten Steuereinrichtung weder Luft angesaugt wird, da der Ejektor nicht mit Arbeitsdruckluft versorgt wird, noch der Sauggreifer bewegt wird, da der Arbeitszylinder in Ruhe bleibt.

Von Vorteil ist, wie bereits erwähnt, dass lediglich der Kolben von seiner Ruhelage in seine Arbeitslage verschoben wird und daher wenig bewegte Bauteile erforderlich sind. Dies bedeutet aber auch, dass die erfindungsgemäße Steuereinrichtung verschleißarm und nahezu wartungsfrei ist und daher Störungen nicht zu befürchten sind.

Eine bevorzugte Ausführungsform sieht vor, dass die erfindungsgemäße Steuereinrichtung als Steuerblock ausgebildet ist. Dies hat den wesentlichen Vorteil, dass mehrere derartige Steuerblöcke zu einer Einheit zusammengefasst werden können so dass sie gemeinsam zum Beispiel mit der Arbeitsdruckluft und/oder dem Arbeitsfluid für den Arbeitszylinder versorgt werden können. Derartige Anordnungen sind platzsparend und einfach montierbar, so dass der für eine Steuereinrichtung erforderliche Platz nicht größer ist, als der vom Sauggreifer beanspruchte Platz an einem Sauggreiferfeld.

Ein weiterer Vorteil besteht darin, die elektrische Ansteuerung der Pilotventile in Form einer Platine realisiert werden kann und somit der gesamte Steuerblock lediglich mit einem einzigen Kabel bzw. einer BUS-Leitung elektrisch kontaktiert werden muss.

Erfindungsgemäß ist die Rückstellkraft für den Kolben mechanischer, pneumatischer, hydraulischer, magnetischer oder elektromagnetischer Natur. Mit Vorzug wird die Rückstellkraft von einer Druckfeder bereitgestellt. Durch eine einstellbare Vorspannung der Druckfeder kann der Schaltdruck des Kolbens auf einfache Weise eingestellt werden.

Mit Vorzug weist der Kolben ausschließlich Sitzdichtungen auf. Dies hat den wesentlichen Vorteil, dass die Reibungskräfte beim Verschieben des Kolbens von der Ruhelage in die Arbeitlage und zurück auf ein Minimum reduziert sind. Über die Sitzdichtungen wird lediglich verhindert, dass Fluide in der Ruhelage oder in der Arbeitslage des Kolbens aus dem Kolbenraum in angrenzende Räume übertreten. Während der Verschiebung des Kolbens von der einen in die andere Lage bedarf es keiner Dichtung, da die Verschiebung in einem sehr kurzen Zeitraum erfolgt. Da keine Gleitdichtungen verwendet werden, kann der Kolben mit sehr kleinen Differenzdrücken verschoben werden und es sind keine Haftreibungen zu überwinden. Außerdem unterliegt der Kolben keinem Verschleiß.

Bei einer Weiterbildung ist vorgesehen, dass der Flächenabschnitt des Kolbens von einer Dichtung umgrenzt ist und in der Ruhelage des Kolbens der Flächenabschnitt über diese Dichtung von der Steuerfläche getrennt ist. Auf diese Weise kann, wenn der Kolben sich in seiner Ruhelage befindet, der Flächenabschnitt, der, bezogen auf die Gesamtfläche der Stirnseite, eine kleine Fläche besitzt, ausschließlich mit dem Arbeitsdruck beaufschlagt werden, ohne dass der Kolben entgegen die Rückstellkraft verschoben wird. Die Dichtung verhindert, dass die Kraft der Arbeitsdruckluft neben dem Flächenabschnitt auch auf die Steuerfläche wirkt.

Mit Vorzug ist die Dichtung ortsfest angeordnet und liegt der Kolben in der Ruhelage an dieser Dichtung an. Hierdurch wird die zu verschiebende Masse des Kolbens reduziert und der Kolben kann einfach mit einer an der Dichtung anliegenden Dichtfläche versehen werden.

Bei einem bevorzugten Ausführungsbeispiel ist die Leitung für die Arbeitsdruckluft von der Dichtung umgeben und mündet innerhalb der Dichtung in Richtung des Kolbens aus. Die Dichtung hat somit auch die Aufgabe, die Leitung für die Arbeitsdruckluft gegenüber der Umgebung abzudichten, so dass die Arbeitsdruckluft ausschließlich auf den zugehörigen Flächenabschnitt des Kolbens wirkt.

Eine Weiterbildung der Erfindung sieht vor, dass die Leitung für die Steuerdruckluft außerhalb der Dichtung in Richtung des Kolbens ausmündet. Somit trennt die Dichtung die Leitung für die Arbeitsdruckluft von der Leitung für die Steuerdruckluft. Sobald aber der Kolben seine Ruhelage verlässt und nicht mehr an der Dichtung anliegt, werden die beiden Leitungen für Arbeitsdruckluft und Steuerdruckluft miteinander verbunden und beide Drücke liegen an der Stirnseite des Kolbens an und die Arbeitsdruckluft wird in Richtung des Ejektors weitergeleitet. Dabei ist die Verbindung zwischen dem Ejektor und der Leitung für die Arbeitsdruckluft permanent offen, so dass der Ejektor bereits durch die Arbeitsdruckluft aktiviert wird. Nach dem Öffnen des Steuerventils, das heißt nach dem Verschieben des Kolbens von der Ruhelage in die Arbeitlage, sind, wie bereits erwähnt, die beiden Leitungen für Arbeitsdruckluft und Steuerdruckluft miteinander verbunden, so dass dem Ejektor auch die Arbeitsdruckluft zufließt.

Ein weiterer wesentlicher Vorteil der Erfindung wird darin gesehen, dass sie bei Stromausfall oder bei Ausfall des Maschinenprogramms eine Haltefunktion aufweist. Der in der Arbeitsstellung sich befindende Kolben hält diese Stellung bei, auch wenn die Steuerdruckluft abgeschaltet wird. Dies ist möglich, da sowohl der Flächenabschnitt als auch die Steuerfläche von der Arbeitsdruckluft beaufschlagt werden und dem Ejektor deshalb die Arbeitsdruckluft zuströmt.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: einen Querschnitt durch die erfindungsgemäße Steuereinrichtung mit in Ruhelage sich befindendem Kolben;
- Figur 2: den Schnitt gemäß Figur 2 mit in Arbeitslage sich befindendem Kolben; und
- Figur 3: einen Schaltplan der Steuereinrichtung mit Sauggreifer und Arbeitszylinder.

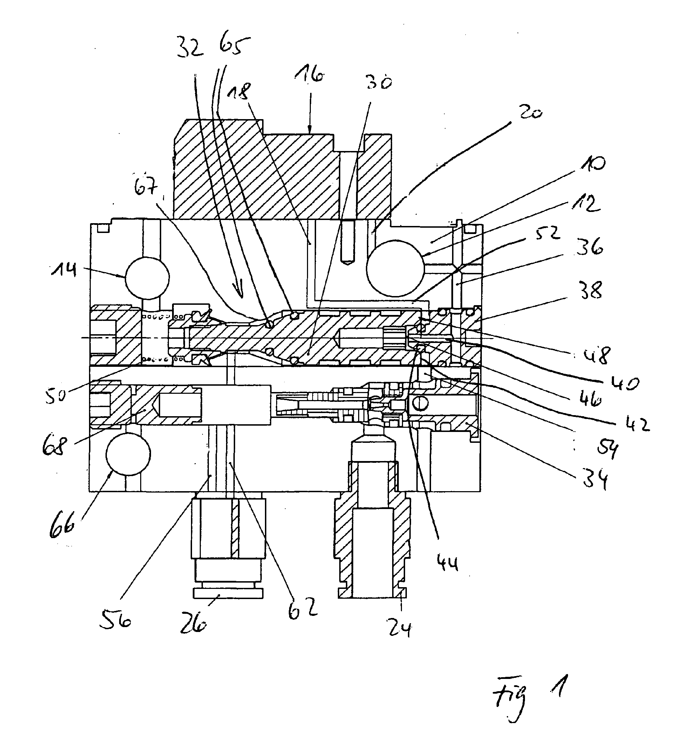

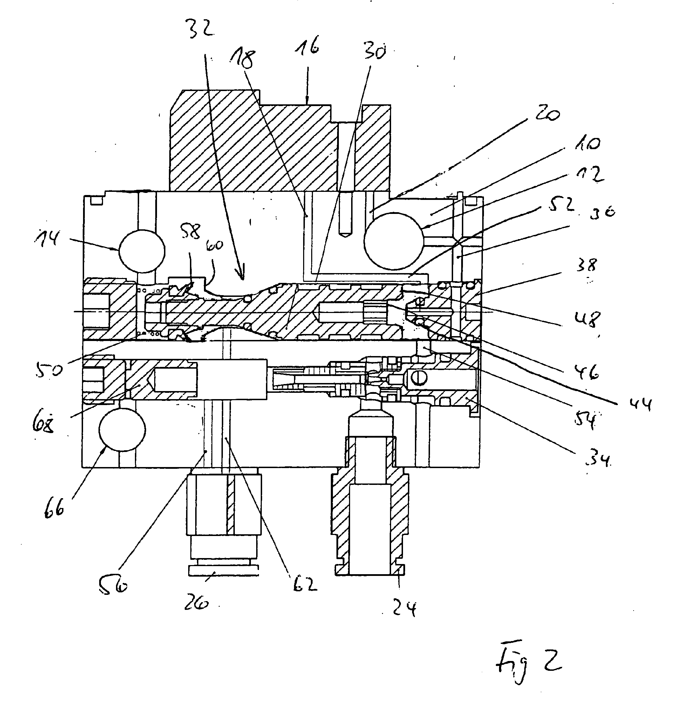

In den Figuren 1 und 2 ist mit dem Bezugszeichen 10 ein Ventilblock dargestellt, der als massives Bauteil ausgebildet ist. Dieser Ventilblock 10 besitzt einen Eingang 12 für Arbeitsdruckluft, welcher als Querbohrung ausgebildet ist, sowie einen Eingang 14 für ein Arbeitsfluid, der ebenfalls als Querbohrung ausgeführt ist. Diese Querbohrungen besitzen den Vorteil, dass mehrere Ventilblöcke 10 in Blickrichtung gemäß Figur 1 hintereinander gesetzt werden können, so dass die Eingänge 12 und 14 zueinander fluchten, so dass alle Ventilblöcke 10 gemeinsam mit Arbeitsdruckluft und Arbeitsfluid versorgt werden können. Außerdem ist erkennbar, dass auf den Ventilblock 10 ein Pilotventil 16 aufgesetzt ist, mit welchem ein Eingang 18 für Steuerdruckluft geöffnet beziehungsweise verschlossen wird. Diese Bauteile besitzen alle die gleiche Breite (Abmessung in Blickrichtung gesehen).

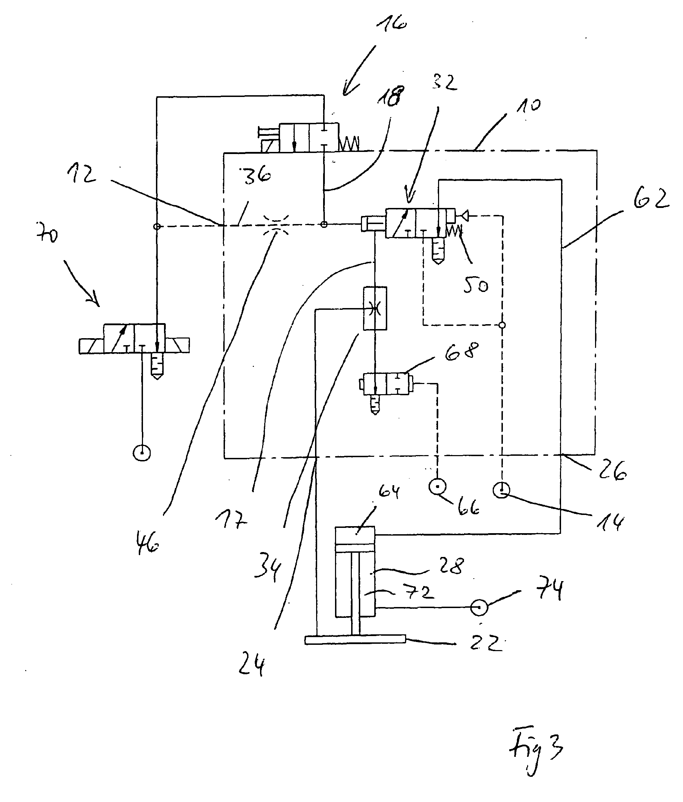

Der Eingang 18 besitzt eine Verbindung 20 zum Eingang 12, so dass die Steuerdruckluft von der Arbeitsdruckluft abgezweigt werden kann. Dieses Pilotventil 16 wird elektrisch von einer Maschinensteuerung (nicht dargestellt) angesteuert und dadurch ein Sauggreifer 22 (Figur 3) gezielt aktiviert beziehungsweise deaktiviert. Der Ventilblock 10 besitzt außerdem einen Sauganschluss 24 für den Sauggreifer 22 sowie einen Ausgang 26, an welchen ein Arbeitszylinder 28 (Figur 3) angeschlossen ist.

Innerhalb des Ventilblocks 10 ist ein Kolben 30 horizontal verschieblich gelagert, wobei der Kolben 30 in der Figur 1 in seiner Ruhelage dargestellt ist. Der Kolben 30 ist Teil eines Steuerventils 32, mit welchem die Zufuhr von Arbeitsdruckluft an einen Ejektor 34 sowie die Verbindung des Eingangs 14 mit dem Ausgang 26 für das Arbeitsfluid gesteuert wird.

Die Funktion des Ventilblocks 10 wird nachfolgend näher erläutert. Liegt am Eingang 12 Arbeitsdruckluft an, so wird diese über einen Bypass 36 einem Stopfen 38 zugeleitet, und von dort über einen zentralen Kanal 40 dem Kolben 30 zugeführt. Da die Stirnfläche 42 des Kolbens 30 an einer Dichtung 44, welche vom Stopfen 38 gehalten wird, anliegt, wird die Stirnfläche 42 von dieser Dichtung 44 in einen Flächenabschnitt 46 und eine Steuerfläche 48 aufgeteilt. In der in der Figur 1 dargestellten Position des Kolbens 30 liegt die Arbeitsdruckluft lediglich am Flächenabschnitt 46 der Stirnfläche 42 an. Der Kolben 30 verbleibt jedoch in der in der Figur 1 gezeigten Ruhelage, da er an seiner gegenüberliegenden Seite von einer Druckfeder 50 abgestützt wird und die Rückstellkraft der Druckfeder 50 größer ist als die am Flächenabschnitt 46 wirkende Kraft der Arbeitsdruckluft.

Wird durch Ansteuerung des Pilotventils 16 der Eingang 12 über die Verbindung 20 mit dem Eingang 18 verbunden, dann wird ein Teil der Arbeitsdruckluft als Steuerdruckluft über einen Kanal 52 der Steuerfläche 48 zugeführt, so dass der Gesamtdruck auf die Stirnfläche 42 durch den an der Steuerfläche 48 wirkenden Druck der Steuerdruckluft erhöht wird. Die Summe der beiden Drücke aus Arbeitsdruckluft und Steuerdruckluft am Flächenabschnitt 46 und der Steuerfläche 48 ist höher als die Rückstellkraft der Druckfeder 50, so dass der Kolben 30 in die in der Figur 2 dargestellte Arbeitslage verschoben wird. In dieser Position des Kolbens 30 strömt über eine Verbindung 54 dem Ejektor 34 sowohl Steuerdruckluft als auch Arbeitsdruckluft zu, der daraufhin Luft am Sauganschluss 24 ansaugt und am Sauggreifer 22 einen Unterdruck erzeugt. Die aus dem Ejektor 34 austretende Luft wird über einen Abluftkanal 56 aus dem Ventilblock 10 abgeführt.

Mit dem Verschieben des Kolbens 30 wird aber auch eine vom Kolben radial abragende Dichtlippe 58 von einem Dichtsitz 60 abgehoben, und dadurch der Eingang 14 über einen Kanal 62 mit dem Ausgang 26 für Arbeitsfluid verbunden. Dies hat zur Folge, dass mit dem Abheben des Kolbens 30 aus der in der Figur 1 dargestellten Ruhelage in die in der Figur 2 dargestellte Arbeitslage Arbeitsfluid einem Druckraum 64 des Arbeitszylinders 28 (Figur 3) zugeführt wird, so dass der Sauggreifer 22 ausgefahren wird. Der Kolben liegt in seiner Arbeitslage über Sitzdichtungen 65 an einem Konus 67 des Ventilblocks 10 an.

Sollte nun zum Beispiel durch Stromausfall oder eine Störung das Pilotventil 16 nicht mehr angesteuert werden und die Verbindung 20 zwischen dem Eingang 12 und dem Eingang 18 trennen, so dass die Steuerdruckluft unterbrochen wird, wird der Kolben 30 weiterhin in der in der Figur 2 dargestellten Arbeitslage gehalten, da an der gesamten Stirnfläche 42, das heißt sowohl am Flächenabschnitt 46 als auch an der Steuerfläche 48, die Arbeitsdruckluft angreift und deshalb der resultierende Druck größer ist als die Rückstellkraft der Druckfeder 50. Sobald der Kolben 30 von der Dichtung 44 abgehoben hat, ist es unerheblich, ob an der Stirnfläche 42 die Steuerdruckluft angreift oder nicht. Die Steuerdruckluft wird lediglich für den Abhebevorgang des Kolbens 30 von der Dichtung 44 benötigt, jedoch nicht zum Halten des Kolbens 30 in der Arbeitsstellung.

Dies bedeutet, dass die erfindungsgemäße Steuereinrichtung auch bei Stromausfall oder bei einer Störung der Maschinensteuerung Unterdruck erzeugt und den Sauggreifer 22 in der ausgefahrenen Stellung hält, so dass das angesaugte und angehobene Werkstück weiterhin sicher gegriffen bleibt. Das Werkstück fällt also nicht vom Sauggreifer 22 ab.

In den Figuren 1 und 2 ist außerdem ein Eingang 66 für Druckluft dargestellt, über welchen ein Kolben 68 aus der in den Figuren 1 und 2 dargestellten Lage nach rechts verschoben werden kann. In dieser verschobenen Position sperrt der Kolben 68 den Abluftkanal 56 ab, so dass der Ejektor 34 durch den Sauganschluss 24 abbläst. Soll der gegriffene Gegenstand vom Sauggreifer 22 gelöst werden, wird der Unterdruck dadurch abgebaut und das Werkstück dadurch abgeworfen, dass über den Sauganschluss 24 nicht mehr angesaugt sondern Druckluft abgeblasen wird, was oben erläutert wurde.

Der in der Figur 3 dargestellte Schaltplan zeigt ein Impulsventil 70, über welches die Zufuhr von Arbeitsdruckluft gesteuert wird. Bei geöffnetem Impulsventil 70 liegt die Arbeitsdruckluft über den Bypass 36 und den Flächenabschnitt 46 am Steuerventil 32 an. Sobald das Pilotventil 16 geöffnet wird, liegt zusätzlich zur Arbeitsdruckluft die Steuerdruckluft über den Kanal 18 am Steuerventil 32 an, wodurch der Kolben 30 verschoben wird. Danach ist die Verbindung 17 zum Ejektor 34 offen, so dass dieser Luft über den Anschluss 24 ansaugen kann. Gleichzeitig ist der Eingang 14 über den Kanal 62 mit dem Ausgang 26 verbunden. Liegt am Eingang 66 ein Druck an, wird der Kolben 68 verschoben, so dass der Ejektor 34, wie oben beschrieben, abbläst.

Eine Rückstellung des Arbeitszylinders 26 und Anheben des Sauggreifers 22 erfolgt dadurch, dass über einen Anschluss 74 im anderen Druckraum 72 ein Druck angelegt wird.

Aus der Figur 3 ist außerdem erkennbar, dass das über den Eingang 14 zugeführte Arbeitsfluid auch an der der Druckfeder 50 zugewandten Stirnseite des Kolbens angreifen und die Druckfeder 50 unterstützen kann.

## Patentansprüche

1. Steuereinrichtung für wenigstens einen Sauggreifer (22) mit
- einem Steuerventil (32),
- einem Ejektor (34),
- einem Eingang (12) für Arbeitsdruckluft für den Ejektor (34),
- einem Eingang (18) für Steuerdruckluft für das Steuerventil (32),
- einem Sauganschluss (24), an welchen der Sauggreifer (22) und der Ejektor (34) angeschlossen sind,
- einem Eingang (14) für Arbeitsfluid für einen den Sauggreifer (22) anhebenden oder absenkenden Arbeitszylinder (28),
- einem Ausgang (26) für das Arbeitsfluid für den Arbeitszylinder (28),
- wobei das Steuerventil (32) einen zwischen einer Ruhelage und einer Arbeitslage verschiebbaren Kolben (30) aufweist, der mittels Beaufschlagung durch eine Rückstellkraft an einer Stirnseite in seiner Ruhelage gehalten wird und in der Ruhelage über einen Flächenabschnitt (46) an seiner anderen Stirnseite (42) von der Arbeitsdruckluft entgegen der Rückstellkraft beaufschlagt wird und eine Steuerfläche (48) aufweist, an welcher die Steuerdruckluft angreift, wobei die Steuerdruckluft die Steuerfläche (48) entgegen der Rückstellkraft beaufschlagt, und wobei die Kraft der Arbeitsdruckluft auf den Flächenabschnitt (46) kleiner ist als die Rückstellkraft und die Summe der Kräfte der Steuerdruckluft auf die Steuerfläche (48) und die Kraft der Arbeitsdruckluft auf den Flächenabschnitt (46) größer ist als die Rückstellkraft und dabei das Steuerventil (32) von der Ruhelage in die Arbeitslage verlagert wird und dabei sowohl
- den Eingang (12) für Arbeitsdruckluft mit dem Ejektor (34) und
- den Eingang (14) und den Ausgang (26) für das Arbeitsfluid für den Arbeitszylinder (28) verbindet.

2. Steuereinrichtung nach Anspruch 1, **dadurch gekennzeichnet, dass** sie als Ventilblock (10) ausgebildet ist.

3. Steuereinrichtung nach einem der vorhergehenden Ansprüche, **dadurch gekennzeichnet, dass** die Rückstellkraft mechanischer, pneumatischer, hydraulischer, magnetischer oder elektromagnetischer Natur ist.

4. Steuereinrichtung nach Anspruch 1 oder 2, **dadurch gekennzeichnet, dass** die Rückstellkraft von einer Druckfeder (50) und/oder der Druckkraft eines Arbeitsfluides bereitgestellt wird.

5. Steuereinrichtung nach einem der vorhergehenden Ansprüche, **dadurch gekennzeichnet, dass** der Kolben (30) ausschließlich Sitzdichtungen (65) aufweist.

6. Steuereinrichtung nach einem der vorhergehenden Ansprüche, **dadurch gekennzeichnet, dass** der Flächenabschnitt (46) des Kolbens (30) von einer Dichtung (44) umgrenzt ist und in der Ruhelage des Kolbens (30) der Flächenabschnitt (46) über diese Dichtung (44) von der Steuerfläche (48) getrennt ist.

7. Steuereinrichtung nach Anspruch 6, **dadurch gekennzeichnet, dass** die Dichtung (44) ortfest ist und der Kolben (30) in der Ruhelage an der Dichtung (44) anliegt.

8. Steuereinrichtung nach Anspruch 6 oder 7, **dadurch gekennzeichnet, dass** die Leitung für die Arbeitsdrucklüft von der Dichtung (44) umgeben ist und innerhalb der Dichtung (44) in Richtung des Kolbens (30) ausmündet.

9. Steuereinrichtung nach einem der Ansprüche 6 bis 8, **dadurch gekennzeichnet, dass** die Leitung für die Steuerdruckluft außerhalb der Dichtung (44) in Richtung des Kolbens (30) ausmündet.

10. Steuereinrichtung nach einem der Ansprüche 6 bis 9, **dadurch gekennzeichnet, dass** die Dichtung (44) die Leitung für die Arbeitsdruckluft von der Leitung für die Steuerdruckluft trennt.

11. Steuereinrichtung nach einem der Ansprüche 6 bis 10, **dadurch gekennzeichnet, dass** die Dichtung (44) eine Sitzdichtung ist.

12. Steuereinrichtung nach einem der vorhergehenden Ansprüche, **dadurch gekennzeichnet, dass** das Schaltverhalten des Steuerventils (32) durch die Größenverhältnisse der einander gegenüberliegenden Stirnflächen des Kolbens (30) einstellbar bzw. änderbar ist.

## Claims

1. Control device for at least one suction gripper (22), comprising
- a control valve (32),
- an ejector (34),
- an entrance (12) for operating compressed air for the ejector (34),
- an entrance (18) for control compressed air for the control valve (32),
- a suction connection (24) to which the suction gripper (22) and the ejector (34) are connected,
- an entrance (14) for operating fluid for a working cylinder which raises or lowers the suction gripper (22),
- an exit (26) for the operating fluid for the working cylinder (28),
the control valve (32) having a piston (30) which is displaceable between a rest position and a working position and is kept in its rest position by application of a restoring force at an end face and, in the rest position, is subjected to application of the operating compressed air against the restoring force over a surface section (46) on its other end face (42) and has a control surface (48) on which the control compressed air impinges, the control compressed air pushing the control surface against the restoring force, and the force of the operating compressed air on the surface section (46) being less than the restoring force and the sum of the forces of the control compressed air on the control surface (48) and the force of the operating compressed air on the surface section (46) being greater than the restoring force and the control valve (32) being displaced from the rest position to the working position thereby and in the process connecting both
- the entrance (12) for operating compressed air to the ejector (34) and
- the entrance (14) and the exit (26) for the operating fluid for the working cylinder (28).

2. Control device according to Claim 1, **characterized in that** it is in the form of valve block (10).

3. Control device according to either of the preceding claims, **characterized in that** the restoring force is of a mechanical, pneumatic, hydraulic, magnetic or electromagnetic nature.

4. Control device according to Claim 1 or 2, **characterized in that** the restoring force is provided by a pressure spring and/or the pressure of an operating fluid.

5. Control device according to any of the preceding claims, **characterized in that** the piston (30) has exclusively seat packings (65).

6. Control device according to any of the preceding claims, **characterized in that** the surface section (46) of the piston (30) is bounded by a packing (44) and, in the rest position of the piston (30), the surface section (46) is separated from the control surface (48) via this packing (44).

7. Control device according to Claim 6, **characterized in that** the packing (44) is stationary and, in the rest position, the piston (30) rests against the packing (44).

8. Control device according to Claim 6 or 7, **characterized in that** the pipe for the operating compressed air is surrounded by the packing (44) and leads in the direction of the piston (30) within the packing (44).

9. Control device according to any of Claims 6 to 8, **characterized in that** the pipe for the control compressed air leads in the direction of the piston (30) outside the packing (44).

10. Control device according to any of Claims 6 to 9, **characterized in that** the packing (44) separates the pipe for the operating compressed air from the pipe for the control compressed air.

11. Control device according to any of Claims 6 to 10, **characterized in that** the packing (44) is a seat packing.

12. Control device according to any of the preceding claims, **characterized in that** the switching behaviour of the control valve (32) can be set or changed by the size ratios of the end faces of the piston (30) which are opposite one another.

## Revendications

1. Dispositif de commande pour au moins une pince aspirante (22) comprenant
- une vanne de commande (32),
- un éjecteur (34)
- une entrée (12) pour de l'air comprimé de travail pour l'éjecteur (34),
- une entrée (18) pour de l'air comprimé de commande pour la vanne de commande (32),
- un branchement d'aspiration (24) auquel sont raccordés la pince aspirante (22) et l'éjecteur (34),
- une entrée (14) pour un cylindre de travail (28) soulevant ou abaissant la pince aspirante (22),
- une sortie (26) pour le fluide de travail pour le cylindre de travail (28),
- la vanne de commande (32) présentant un piston (30) coulissant entre une position de repos et une position de travail, qui est maintenu dans sa position de repos au moyen d'une sollicitation par une force de rappel sur un côté avant et est sollicité dans la position de repos au moyen d'une partie de surface (46) sur son autre côté avant (42) par de l'air comprimé de travail dans le sens contraire à la force de rappel et présente une surface de commande (48), sur laquelle l'air comprimé de commande s'applique, l'air comprimé de commande sollicitant la surface de commande (48) dans le sens contraire à la force de rappel, et la force de l'air comprimé de travail exercée sur la partie de surface (46) étant inférieure à la force de rappel et à la somme des forces de l'air comprimé de commande exercées sur la surface de commande (48) et la force de l'air comprimé de travail exercée sur la partie de surface (46) étant supérieure à la force de rappel et la vanne de commande (32) étant déplacée alors de la position de repos dans la position de travail et reliant alors aussi bien
- l'entrée (12) pour de l'air comprimé de travail à l'éjecteur (34) et
- l'entrée (14) et la sortie (26) pour le fluide de travail pour le cylindre de travail (28).

2. Dispositif de commande selon la revendication 1, **caractérisé en ce qu'**il est réalisé sous forme de bloc de soupape (10).

3. Dispositif de commande selon l'une quelconque des revendications précédentes, **caractérisé en ce que** la force de rappel est de nature mécanique, pneumatique, hydraulique, magnétique ou électromagnétique.

4. Dispositif de commande selon la revendication 1 ou 2, **caractérisé en ce que** la force de rappel est fournie par un ressort de pression (50) et/ou la force de pression d'un fluide de travail.

5. Dispositif de commande selon l'une quelconque des revendications précédentes, **caractérisé en ce que** le piston (30) présente exclusivement des joints de siège (65).

6. Dispositif de commande selon l'une quelconque des revendications précédentes, **caractérisé ce que** la partie de surface (46) du piston (30) est entourée par un joint (44) et, dans la position de repos du piston (30), la partie de surface (46) est séparée de la surface de commande (48) au moyen de ce joint (44).

7. Dispositif de commande selon la revendication 6, **caractérisé en ce que** le joint (44) est fixe et le piston (30) s'applique sur le joint (44) dans la position de repos.

8. Dispositif de commande selon la revendication 6 ou 7, **caractérisé en ce que** la conduite pour l'air comprimé de travail est entourée par le joint (44) et débouche à l'intérieur du joint (44) en direction du piston (30).

9. Dispositif de commande selon l'une quelconque des revendications 6 à 8, **caractérisé en ce que** la conduite pour l'air comprimé de commande débouche à l'extérieur du joint (44) en direction du piston (30).

10. Dispositif de commande selon l'une quelconque des revendications 6 à 9, **caractérisé en ce que** le joint (44) sépare la conduite pour l'air comprimé de travail de la conduite pour l'air comprimé de commande.

11. Dispositif de commande selon l'une quelconque des revendications 6 à 10, **caractérisé en ce que** le joint (44) est un joint de siège.

12. Dispositif de commande selon l'une quelconque des revendications précédentes, **caractérisé en ce que** le comportement à la commutation de la vanne de commande (32) peut être réglé ou modifié par les rapports de grandeurs des surfaces avant se faisant face du piston (30).
